# EUROPÄISCHE PATENTSCHRIFT

(11) **EP 2 234 523 B1**
(45) Veröffentlichungstag und Bekanntmachung des Hinweises auf die Patenterteilung: **21.11.2012**
(21) Anmeldenummer: 09704504.1
(22) Anmeldetag: 19.01.2009
(51) Int. Cl.: A47J 37/12

(54) **BACKGERÄT FÜR IN FETTBÄDERN GEBACKENE FETTGEBÄCKARTEN, INSBESONDERE FÜR HAUSHALTE**
BAKING DEVICE FOR TYPES OF FATTY FOODS BAKED IN FAT BATHS, IN PARTICULAR FOR HOUSEHOLDS
DISPOSITIF DE CUISSON POUR DES PÂTISSERIES CUITES DANS DES BAINS DE MATIÈRE GRASSE À USAGE MÉNAGER

(30) Priorität: 25.01.2008 HU 0800048
(43) Veröffentlichungstag der Anmeldung: 06.10.2010
(73) Patentinhaber: Jánosi, István, 1221 Budapest (HU); Román, Péter, 1192 Budapest (HU); Vogronics, László, 2030 Érd (HU)
(72) Erfinder: Jánosi, István, 1221 Budapest (HU); Román, Péter, 1192 Budapest (HU); Vogronics, László, 2030 Érd (HU)
(74) Vertreter: Gedeon, Sandor
(86) Internationale Anmeldenummer: PCT/HU2009/000005
(87) Internationale Veröffentlichungsnummer: WO 2009/093088

(56) Entgegenhaltungen:
- WO-A-2008/081213
- US-B1- 6 708 603

## Beschreibung

Gegenstand der Erfindung ist eine Backgerät für in Fettbädem gebackene Fettgebäckarten, insbesondere für Haushalte, in welchem Backgerät
- eine, auf zum Gehäuse des Backgeräts befestigte Beilagen legbare und von dort entfernbare Fettwanne und
- eine Heizeinheit zwischen dem Grundplatte des Backgeräts, sowie der Fettwanne, ferner
- eine untere Backplatte und eine obere Backplatte angeordnet sind, die
- zueinander befestigt eine geschlossene Backeinheit bilden, voneinander entfernbar sind und mindestens ihre miteinander parallelen Oberflächen perforiert oder netzförmig ausgeformt werden.

Zur häuslichen Zubereitung von, in Fettwannen gebackenen Fettgebäckarten, zuerst zur Zubereitung des an der Welt verbreiteten Krapfens, sowie auch der geliebten ungarischen Spezialität, des Langosch wird noch heute eine Stielpfanne angewendet. In die Pfanne wird Speiseöl gegossen oder das Braten wird mit geschmelztem Fett durchgeführt so, daß eine, von der Größe abhängige Anzahl der vorbereiten und portionierten Teiglinge in die Pfanne gelegt wird, eine Seite gebacken wird, dann folgt mit einem Gabel umgewendet das Backen der anderen Seite.

Dieser Vorgang läßt aber aus hygienischem Gesichtspunkt noch viel zu wünschen übrig. Das Fett kann ausspritzen, insbesondere beim Schmelzen oder bei der Umwendung während des Backens, sowie nach dem Backen bei der Entfernung des Fettgebäcks aus der Pfanne und in einem besseren Fall macht es einen entfernbaren Fleck, kann es aber auch Brandwunde verursachen.

Zur Zubereitung von, in Fettwannen gebackenen Fettgebäckarten werden spezielle Maschine, Automaten seit langem angewendet, die von diesen Mängeln frei sind, aber die Benutzung diese Maschinen in den Haushalten, wo nur seltener werden solche Fettgebäckarten zubereitet, können sie nicht gut ausgenützt werden.

Ein solcher Automat ist aus der internationalen Patentanmeldung PCT/HU2007/000130 zu erkennen. Diese Maschine erledigt die Speisung des Teiglings automatisch mittels horizontaler Eindrehung des auf die Backplatte gelegten Teiglings durch eine, im Mantel des Gehäuses des Automaten gemachte Öffnung. Im Gehäuse wird die Backplatte vor dem Backen mit einer perforierten Backplattendecke verbindet und so werden diese beide während des Backens einen geschlossenen Wendekorb gebildet. Der Wendekorb wird in das Fettbad gesenkt so, daß der Teigling innerhalb des Wendekorbs im Fett schwimme. Nach dem Backen der unteren Seite wird der Wendekorb mittels eines Mechanismus hochgehoben, ferner wird er um seine eigene horizontale Achse gewendet und in das Fettbad zurückgesenkt, wo wird die andere Site gegart. Nach dem Ablauf der Backzeitdauer wird der Wendekorb durch den Mechanismus wieder aufgehoben und mittels zweimaliger Wendung von 90° tröpfelt das überflüssige Fett herab. Danach wird die Backplattendecke von der Backplatte entfernt und die Backplatte wird mit dem fertiggebackenen Fettgebäck durch die, im Mantel des Gehäuses des Automaten befindliche Öffnung horizontal ausgedreht. Nach der Entfernung des Fettgebäcks aus der Backplatte kann die nächste Portion gebackt werden.

Dieser Automat hat kleiner Raumbedarf infolge seiner wärmetechnisch schließbaren, staubfesten, energiesparsamen, umweltfreundlichen und kompakten Ausführung, jedoch einerseits er beansprucht mehr Raum wegen der horizontalen Ausdrehung der Backplatte, während der Speisung und Entfernung, andererseits kann mit einer betrachtungswerten Benutzung nur in den mittleren Kreisen der Bevölkerung gerechnet werden, aber er kann wegen wirtschaftlichen Gründen auch hier nur in einem verhältnismäßig kleinen Kreis sich verbreiten.

Die Aufgabe der Erfindung ist die Erstellung eines, für in Fettwannen gebackene Fettgebäckarten, besonders für größere Fettgebäckarten, z.B. auch für Langoschbacken geeigneten Backgeräts, welches mit den Vorteilen (staubfest, energiesparsam, umweltfreundlich und kompakt) des erwähnten Automaten verfügt, jedoch ist es infolge seines einfachen und wirtschaftlichen Ausführung auch für massenhafte Verbreitung geeignet.

Der Grund der Erfindung beruht auf der Kenntnis, daß ein Wendekorb ohne eine horizontale Ausdrehung auch erstellt werden kann, wenn die Einsetzung des Teiglings und die Entfernung des Fettgebäcks traditionell, manuell durchgeführt werden, ferner werden die Backplatte und die Backplattendecke ihrer Ränder entlang mit einem Gelenkbolzen verbunden und der Wendkorb wird mit Antreiben der Backplattendecke erstellt, danach mit Hochklappen aufgemacht.

Das Wesen der Erfindung ist
- das Backgerät ein unteres Gehäuse und ein oberes Gehäuse aufweist,
- das, mit einer, seines oberen Randes aufschließbaren Decke versehene obere Gehäuse zum unteren Gehäuse mit einer luft-, bzw. wasserdichten Passung befestigbar und von dort entfernbar verbunden wird, ferner
- die Fettwanne im unteren Gehäuse, die Backeinheit im oberen Gehäuse angeordnet sind, und
- die Backeinheit, zwischen der, mit der Mittellinie der Backeinheit parallelen Tragsäule und der Leitstütze, in sich bekannter Weise ohne Umdrehung senkbar und mit einer Umdrehung von 180° aufhebbar angeordnet ist.

Die Erfindung wird ausführlicher anhand der in den Zeichnungen dargestellten Ausführungsbeispiele näher erläutert. Es zeigt:
- Fig.1: einen Längsabschnitt durch die vertikalen Mittellinie eines Ausführungsbeispiels des Backgeräts nach der Erfindung;
- Fig.2: einen Abriß A-A,
- Fig.3: einen Einzelteil C und
- Fig.4: einen Abriß B-B des in Fig.1 dargestellten Backgeräts;

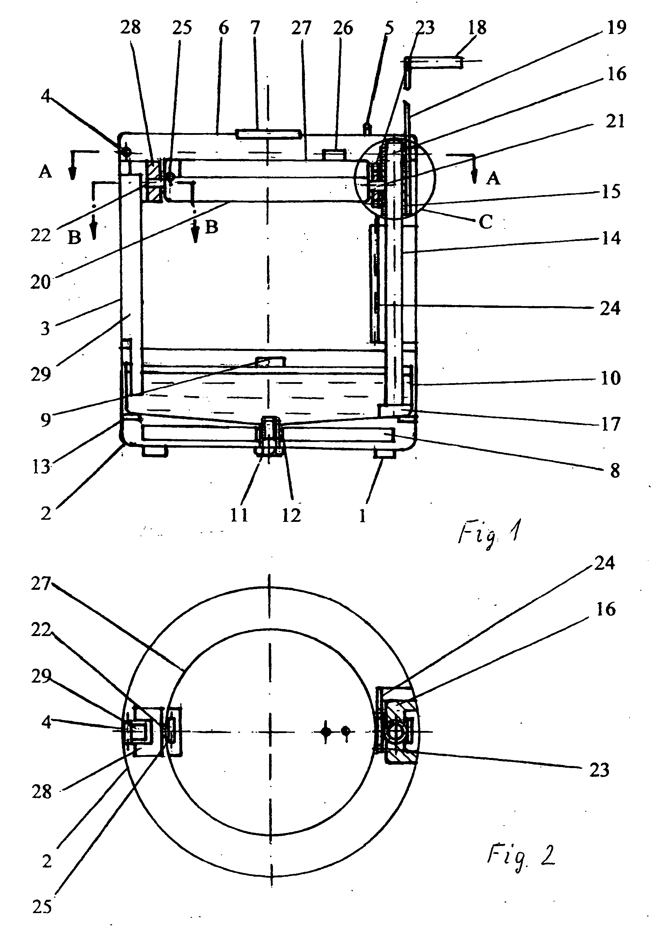

Das in den Fig. 1 und 2 dargestellte Backgerät hat ein, auf Füße (1) stehendes, wärmeisoliertes, vorzugsweise zylinderförmiges unteres Gehäuse (2) und ein oberes Gehäuse (3). Die äußeren Durchschnitte der Gehäuse (2,3) sind vorzugsweise gleich. Der untere Rand der Mantelfläche des oberen Gehäuses (3) wird zum oberen Rand der Mantelfläche des unteren Gehäuses (2) in sich bekannter Weise, mit einer luft-, bzw. wasserdichten Passung befestigbar und von dort entfernbar verbunden. Zum oberen Rand des oberen Gehäuses (3) ist eine um einem Gelenkbolzen (4) drehend aufschließbare, mit einem Griff (5) versehene Decke (6) befestigt. Die Decke (6) ist in ihrer Oberfläche, vorzugsweise in der Umgebung der vertikalen Mittellinie des Geräts mit einem entfernbaren Filtereinsatz (7) versehen.

Oberhalb der Grundplatte des unteren Gehäuses (2) sind eine Heizeinheit (8) und eine, aus dem unteren Gehäuse (2) mittels Hebeohren (9) entfernbare Fettwanne (10) oberhalb der Heizeinheit (8) angeordnet. In der auf Backen bereiten Lage ist der obere Rand der Fettwanne (10) unterhalb der Ebene des oberen Randes des unteren Gehäuses (2) zu befinden. Die Grundplatte der Fettwanne (10) ist mit einer, vorzugsweise in der vertikalen Mittellinie des unteren Gehäuses (2) durch die Grundplatte des unteren Gehäuses (2) und durch die Heizeinheit geführten, mit einer Schraube (11) schließbaren Fettauslaßöffnung (12) versehen. Die Fettwanne (10) wird mit zum unteren Gehäuse (2) befestigten Beilagen (13) auf das untere Gehäuse (2) gelegt.

In die Fettwanne (10) ragt eine, mit der vertikalen Mittellinie des oberen Gehäuses (3) parallele Tragsäule (14), in der Umgebung des Mantels des oberen Gehäuses (3), innerhalb des Mantels hinein, auf welchem eine gleitbare Traghülse (15) angeordnet wird. Das obere Ende der Tragsäule (14) wird mit einem U-förmigen, oberen Säulenhalter (16) zum Mantel des oberen Gehäuses (3) befestigt. Das untere Ende der Tragsäule (14) wird in eine Bohrung eines, zum Boden der Fettwanne (10) befestigten unteren Säulenhalter (17) gleitbar ausgestaltet. Zum Mantel der Traghülse (15) ist ein vertikaler, in seinem oberen Ende vorzugsweise mit einem Griff (18) versehenen Lenkarm (19) befestigt.

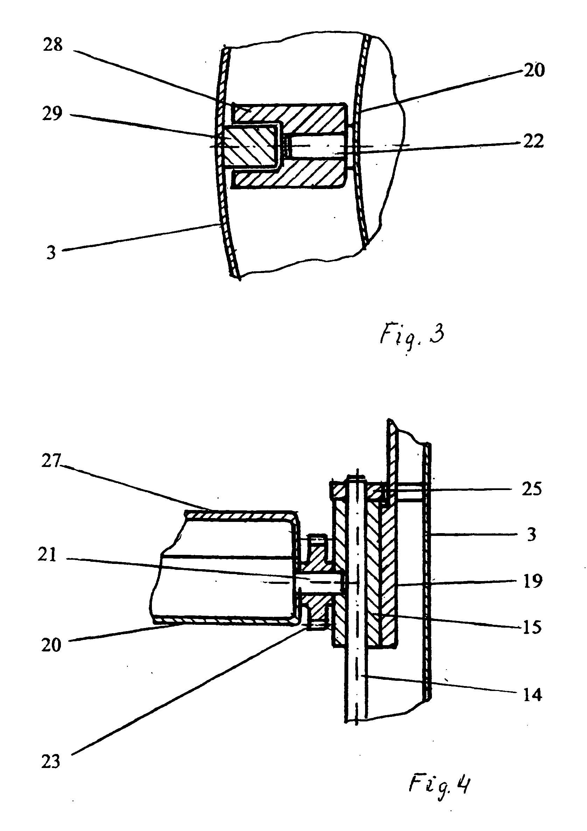

Der Mantel der Traghülse (15) verweist eine, die vertikale Mittellinie des oberen Gehäuses (3) schnittende, mit einer, auf diese Mittellinie senkrechte Achse versehene Bohrung, in welche ein, zur, auf die vertikale Mittellinie des oberen Gehäuses (3) vertikalen, unteren Backplatte (20), in einem auf die vertikale Mittellinie des oberen Gehäuses (3) senkrechten Durchmesser, miteinander 180° bildend befestigter Zapfen (21) hineinragt. (Fig.3). Auf die untere Backplatte (20) ist ein, mit dem Zapfen (21) koaxialer anderer Zapfen (22) an der anderen Ende des den Zapfen (21) enthaltenen Durchmessers des oberen Gehäuses (3) befestigt. (Fig.4). Auf den Zapfen (21) ist ein mit einem Klinkensperrtrieb versehenes Zahnrad (23) zwischen der Traghülse (15) und der Backplatte (20) befestigt, welcher mit einer, zum Mantel des oberen Gehäuses (3) befestigten, mit der Mantellinie parallelen Zahnstange (24) in funktionaler Verbindung steht.

Zum oberen Rand des unteren Backplatte (20) ist eine, um einen Gelenkbolzen (25) drehend aufmachbare, mit einem Griff (26) versehene, obere Backplatte (27) verbunden. Beim Schließen werden die Backplatten (20,27) mit einem in sich bekannten Sperrmittel, z.B. mit einer Klappe zueinander befestigt. Die Backplatten (20,27), oder mindestens die miteinander parallelen Oberflächen der Backplatten (20,27) werden perforiert oder netzförmig ausgeformt. Die Backplatten (20,27) bilden eine geschlossene Backeinheit während der Backzeit so, daß das heiße Fett durch die perforierten Wände strömen kann.

Der Zapfen (22) der Backplatte (20) ist in die Bohrung eines, U-förmigen, vorzugsweise mit einem Querschnitt von rechteckigem Viereck verweisenden Verdrehungsverhinderer (28) hineinragend und in dieser verdrehbar angeordnet. Die Seitenwände des Verdrehungsverhinderers (28) sind neben die gegenüberliegenden Wände einer, zum Mantel des oberen Gehäuses (3) befestigten, vorzugsweise mit einem Querschnitt von rechteckigem Viereck verweisenden Leitstütze (29) hineinragend und darauf leitend ausgeformt. Das untere, einen herabgesetzten Querschnitt verweisende Ende der Leitstütze (29) ragt über den unteren Rand des oberen Gehäuses (3) in die Fettwanne (10) hinein.

Das erfindungsmäßige Gerät arbeitet wie folgt:
Nach der Auffüllung der Fettwanne (10) wird das obere Gehäuse (3) auf das untere Gehäuse (2) gelegt und - nötigenfalls - in sich bekannter Weise darauf befestigt. Die Heizung wird eingeschaltet und das Fett wird gegen 180° Grad geheizt. Die obere Backplatte (27) ist in aufgemachter Lage, so kann der vorbereitete und geformte Teigling (aus den Größeren ein Stück, aus den Kleineren so viel, wie viel nebeneinander hineingehen) auf die untere Backplatte (20) gelegt werden. Die kleineren Teiglinge sind mindestens so groß, daß sie in der Backeinheit nicht umwenden können, d.h. nicht die gleiche Seite zweimal gegart werde. Die obere Backplatte (27) wird auf die untere Backplatte (20) gebeugt, die Decke (6) wird auf das obere Gehäuse (3) geschlossen und damit gelangt die Backeinheit in eine, auf Backen bereite Lage.

Den Gelenkarm (19) nach unten drückend wird das mit Klinkensperrtrieb versehenes Zahnrad (23) der Zahnstange (24) entlang vorbeigerückt so, daß sie inzwischen miteinander nicht verbinden und darum dreht die nach unten bewegende Backeinheit sich nicht um. In der unteren Endlage der Backeinheit füllt das, durch die unteren Backplatte (20) einfließende Fett die Backeinheit in vertikaler Richtung ungefähr bis zur Hälfte so, daß der Teigling (die Teiglinge) am Fettspiegel schwimme(n). Das Backgerät kann in sich bekannter Weise mit einem Licht- und/oder Tonsignalgeber versehen werden, welchen durch die Backeinheit aktiviert wird, als diese ihre unterste Lage erreicht. Der Signalgeber schaltet am Ende der Backzeit ein und bleibt solange eingeschaltet, bis die Aushebung der Backeinheit nicht beginnt oder er nicht ausgeschaltet wird.

Nach Ablauf der eingestellten, bzw. notwendigen Backzeit wird das mit Klinkensperrtrieb versehenes Zahnrad (23) den Gelenkarm (19) nach oben ziehend mit der Zahnstange (24) verbindet, wobei die Backeinheit durch die Zahnstange (24) mit 180° umgedreht wird. So gelangt die gegarte Seite nach oben und die zu garende Seite nach unten. Die Lange und die Lage der Zahnstange (24) sind so zu bestimmen, daß die Backeinheit während der Umdrehung immer oberhalb des Fettspiegels sei, bzw. am Ende der Umdrehung nicht in die Decke (6) stoße.

Danach wird das Backen der anderen Seite auf gleiche Weise, wie die erste Seite, durchgeführt. Eine Unterschied ist, daß die Backeinheit nach der Beendigung des Backens, während der Bewegung nach oben, als die Backeinheit eine vertikale Lage erreicht, bis einer kurzen Zeit stehengeblieben wird, daß das überflüssige Fett vom fertigen Fettgebäck abtropfe und in die Fettwanne (10) rückgelange. Nach der Öffnung der Decke (6) und der obere Backplatte (27) kann das Fettgebäck aus dem Gerät entfernt und nach Einlegen eines anderen Teiglings das nächste Backen in Bewegung gesetzt werden.

## Patentansprüche

1. Backgerät für in Fettbädern gebackene Fettgebäckarten, insbesondere für Haushalte, in welchem Backgerät
- eine, auf zum Gehäuse des Backgeräts befestigte Beilagen legbare und von dort entfernbare Fettwanne und
- eine Heizeinheit zwischen dem Grundplatte des Backgeräts, sowie der Fettwanne, ferner
- eine untere Backplatte und eine obere Backplatte angeordnet sind, die
- zueinander befestigt eine geschlossene Backeinheit bilden, voneinander entfernbar sind und mindestens ihre miteinander parallelen Oberflächen perforiert oder netzförmig ausgeformt werden,
**dadurch gekennzeichnet,daß**
- das Backgerät ein unteres Gehäuse (2) und ein oberes Gehäuse (3) aufweist,
- das, mit einer, seines oberen Randes aufschließbaren Decke (6) versehene obere Gehäuse (3) zum unteren Gehäuse (2) mit einer luft-, bzw. wasserdichten Passung befestigbar und von dort entfernbar verbunden wird, ferner
- die Fettwanne (10) im unteren Gehäuse (2), die Backeinheit im oberen Gehäuse (3) angeordnet sind, und
- die Backeinheit, zwischen der, mit der Mittellinie der Backeinheit parallelen Tragsäule (14) und der Leitstütze (29), in sich bekannter Weise ohne Umdrehung senkbar und mit einer Umdrehung von 180° aufhebbar angeordnet ist.

2. Backgerät nach Anspruch 1, **dadurch gekennzeichnet, daß**
- eine gleitbare Traghülse (15) an der Tragsäule (14) angeordnet wird, und
- die Tragsäule (1) in ihrer oberen Ende mit einem oberen Säulenhalter (16) zum Mantel des oberen Gehäuses (3) und in ihrer unteren Ende mit einem unteren Säulenhalter (17) zum Boden der Fettwanne (10) befestigt ist.

3. Backgerät nach Anspruch 2, **dadurch gekennzeichnet, daß**
- ein vertikaler, in seinem oberen Ende vorzugsweise mit einem Griff (18) versehenen Lenkarm (19) zum Mantel der Traghülse (15) befestigt ist.

4. Backgerät nach Anspruch 2 oder 3, **dadurch gekennzeichnet, daß**
- ein, zur unteren Backplatte (20) befestigter Zapfen (21) in eine, mit einer, auf die vertikale Mittellinie des oberen Gehäuses (3) schnittenden, darauf senkrechten Achse versehene Bohrung hineinragt, auf welcher Zapfen (21)
- ein, mit einem Klinkensperrtrieb versehenes Zahnrad (23) zwischen der Traghülse (15) und der Backplatte (20) befestigt ist, und
- das Zahnrad (23) mit einer, zum Mantel des oberen Gehäuses (3) befestigten, mit der Mantellinie parallelen Zahnstange (24) in funktionaler Verbindung steht.

5. Backgerät nach Anspruch 4, **dadurch gekennzeichnet, daß**
- die Lange und die Lage der Zahnstange (24) die Umdrehung der Backeinheit mit 180° zulassend bestimmt wird.

6. Backgerät nach Anspruch 2 oder 3, **dadurch gekennzeichnet, daß**
- ein, mit dem Zapfen (21) koaxialer anderer Zapfen (22) auf die untere Backplatte (20) an der anderen Ende des den Zapfen (21) enthaltenen Durchmessers des Gehäuses (3) befestigt ist.

7. Backgerät nach Anspruch 6, **dadurch gekennzeichnet, daß**
- der Zapfen (22) in die Bohrung eines, U-förmigen, vorzugsweise mit einem Querschnitt von rechteckigem Viereck verweisenden Verdrehungsverhinderer (28) hineinragend und in dieser verdrehbar angeordnet ist, und
- die Seitenwände des Verdrehungsverhinderers (28) neben die gegenüberliegenden Wände einer, zum Mantel des oberen Gehäuses (3) befestigten, vorzugsweise mit einem Querschnitt von rechteckigem Viereck verweisenden Leitstütze (29) hineinragend und darauf leitend ausgeformt sind.

8. Backgerät nach Anspruch 7, **dadurch gekennzeichnet, daß**
- das untere, einen herabgesetzten Querschnitt verweisende Ende der Leitstütze (29) ragt über den unteren Rand des oberen Gehäuses (3) in die Fettwanne (10) hinein.

9. Backgerät nach einem oder mehreren der Ansprüche 1 bis 8, dadurch g e-kennzeichnet, daß
- der obere Rand der Fettwanne (10) in der auf Backen bereiten Lage unterhalb der Ebene des oberen Randes des unteren Gehäuses (2) zu befinden ist.

## Claims

1. Frying appliance for making deep-fried pastries, particularly for households with
- A frying pan resting on spacers fixed to the cover of the frying unit and removable from there, and
- A heating element between the bottom of the frying appliance and the oil pan, and
- A lower frying plate and an upper frying plate - perforated at least on their parallel surfaces or grill-like in design - which can be spaced from each other and when fixed together compose a single frying unit,
**characterized in that**
- The cover comprises a lower cover (2) and an upper cover (3),
- The upper cover (3) possesses a lid (6) opening along the upper edge of the lower cover (2) and the lid has an airtight and leak-proof fit with which it is joined to the lower cover so that it can be fixed and released, and
- The oil pan (10) is located in the lower cover (2) while the frying unit is located in the upper cover (3), and
- The frying unit is arranged between the support column (14) and the guiding column (29), being parallel with the midline of the frying unit, in the known manner, where the frying unit can be lowered without rotation and raised by turning it 180 degrees.

2. The frying appliance described in Claim 1 **characterized in that**
- There is a sliding support tube (15) on the support column (14), and
- The support column (14) is attached to the inner surface of the upper cover (3) with the upper column support (16) fixed to its ends and to the bottom of the oil pan (10) with the lower column support (17).

3. The frying appliance described in Claim 2 **characterized in that**
- There is a vertical moving arm (19), preferably fitted with a handle (18) at its top end, fixed to the surface of the support tube (15) on its side facing the cover (3).

4. The frying appliance described in Claim 2 or Claim 3 **characterized in that**
- There is a pin (21) fixed to the lower frying plate (20) extending into the hole going through and with an axis perpendicular to the vertical midline of the upper cover (3), on the surface of the support tube (15),
- And a gear with a ratchet mechanism (23), is fixed on the pin (21) between the support tube (15) and the lower frying plate (20), and
- The gear (23) is in a functional connection with the rack (24), fixed to the surface of the upper cover (3) and parallel with the component of the surface of the upper cover (3).

5. The frying appliance described in Claim 4 **characterized in that**
- The length and position of the rack (24) is configured in a manner allowing the 180-degree rotation of the frying unit.

6. The frying appliance described in Claim 4 or Claim 5 **characterized in that**
- There is another pin (22), coaxial with the pin (21), fixed to the lower frying plate (20) on the opposite side of the diameter of the lower frying plate (20).

7. The frying appliance described in Claim 6 **characterized in that**
- The other pin (22) is located so as to extend into the U-shaped and preferably rectangular cross section swivel inhibitor hole (28) in a manner that it can rotate therein, where
- The arms of the swivel inhibitor (28) are arranged so that they extend along and are guided by the opposite sides of the preferably rectangular cross section guiding column (29), fixed to the surface of the upper cover (3).

8. The frying appliance described in Claim 7 **characterized in that**
- The lower reduced cross-section end of the guiding column (29) extends into the oil pan beyond the lower edge of the upper cover (3).

9. The frying appliance described in Claims 1-8 **characterized in that**
- When ready for frying, the upper edge of the oil pan (10) is under the level of the upper edge of the lower cover (2).

## Revendications

1. Friteuse pour pâtes à frire, en particulier à usage domestique, laquelle friteuse comprend :
- une cuve pour huile de friture amovible, à placer sur des entretoises fixées à la couverture de la friteuse,
- un élément de chauffage situé entre le fond de la friteuse et la cuve pour hui le de friture, et
- une plaque à frire inférieure et une plaque à frire supérieure pouvant être éloignées l'une de l'autre, et toutes les deux perforées ou en grille au moins sur leur face parallèle et formant ensemble, fixées l'une à l'autre, une unité à friture, **caractérisée en ce que**
- la couverture se compose d'une couverture inférieure (2) et d'une couverture supérieure (3),
- la couverture supérieure (3) disposant d'un couvercle escamotable (6) se raccorde à la couverture inférieure (2), au niveau du bord supérieur de celle-ci, par une jointe étanche à l'air et aux liquides, de manière à être bloquée ou éloignée, **en ce que**
- la cuve (10) pour huile de friture est positionnée dans la couverture inférieure (2), l'unité à friture est placée dans la couverture supérieure (3), et
- l'unité à friture est aménagée entre la tige de maintien (14) parallèle à la ligne médiane de l'unité à friture et la colonne de guidage (29), de la manière connue, à pouvoir descendre sans pivoter et à pouvoir monter en pivotant de 180°.

2. Friteuse selon la revendication 1, **caractérisée en ce que**
- la tige de maintien (14) est munie d'un tube de maintien (15), et
- la tige de maintien (14) est fixée au moyen d'un support de tige supérieur (16) à la surface intérieure de la couverture supérieure (3), et au moyen d'un support de tige inférieur (17) au fond de la cuve (10) pour huile de friture.

3. Friteuse selon la revendication 2, **caractérisée en ce que**
- un levier de commande (19), avantageusement muni, à son extrémité supérieure, d'une poignée verticale (18), est fixé à la surface du tube de maintien (15), du côté de la couverture supérieure (3).

4. Friteuse selon l'une quelconque des revendications 2 à 3, **caractérisée en ce que**
- à la surface du tube de maintien (15), une clavette (21) fixée à la plaque à frire inférieure (20) s'enfonce dans un alésage ayant un axe perpendiculaire à la ligne médiane verticale de la couverture supérieure (3) et traversant celle-ci,
- laquelle clavette (21) est équipée, entre le tube de maintien (15) et la plaque à frire inférieure (20), d'une roue dentée (23) munie d'un cliquet, et
- la roue dentée (23) étant en rapport de fonctionnement avec le barreau de crémaillère (24) fixé à la surface de la couverture supérieure (3) et parallèle à la génératrice de la surface de la couverture supérieure (3).

5. Friteuse selon la revendication 4, **caractérisée en ce que**
- la longueur et la disposition du barreau de crémaillère (24) sont conçues de façon à permettre un pivotement de 180° de l'unité à friture.

6. Friteuse selon l'une quelconque des revendications 4 à 5, **caractérisée en ce que**
- sur la plaque à frire inférieure (20), se trouve, de manière coaxiale avec la clavette (21), une autre clavette (22) qui est fixée en diagonal sur le côté opposé de la plaque à frire inférieure (20).

7. Friteuse selon la revendication 6, **caractérisée en ce que**
- cette autre clavette (22) est disposée dans l'alésage d'un organe à empêcher le pivotement (28) en forme de U, et avantageusement rectangulaire, d'une manière enfoncée et pouvant être tournée,
- les tiges duquel organe à empêcher le pivotement (28) sont disposées de façon à longer - et à être guidées par - les deux côtés opposés de la colonne de guidage (29) fixée à la surface de la couverture supérieure (3) et ayant de préférence une section rectangulaire.

8. Friteuse selon la revendication 7, **caractérisée en ce que**
- l'extrémité inférieure à section réduite de la colonne de guidage (29), dépassant le bord inférieur de la couverture supérieure (3), pénètre dans la cuve (10) pour huile de friture.

9. Friteuse selon l'une quelconque des revendications 1 à 8, **caractérisée en ce que**
- le bord supérieur de la cuve (10) pour huile de friture, en position de friture, ne dépasse pas le plan du bord supérieur de la couverture inférieure (2).
